# FASCICULE DE BREVET EUROPEEN

(11) **EP 3 176 019 B1**
(45) Date de publication et mention de la délivrance du brevet: **12.09.2018**
(21) Numéro de dépôt: 16197366.4
(22) Date de dépôt: 04.11.2016
(51) Int. Cl.: B60K 1/02, B60K 6/52, B60K 17/16, B60K 17/356

(54) **GROUPE MOTOPROPULSEUR D'UN VEHICULE**
MOTORANTRIEBSANLAGE EINES FAHRZEUGS
POWER PLANT OF A VEHICLE

(30) Priorité: 04.12.2015 FR 1561842
(43) Date de publication de la demande: 07.06.2017
(73) Titulaire: PSA Automobiles SA, 78300 Poissy (FR)
(72) Inventeur: DELAND HUY, Eric, 91100 Corbeil Essonnes (FR); BRULHARD, Valerie, 78140 Velizy Villacoublay (FR)

(56) Documents cités:
- EP-A1- 0 919 425
- EP-A1- 2 514 620

## Description

L'invention concerne un groupe motopropulseur d'un véhicule, notamment automobile.

L'invention à un véhicule hybride comprenant d'une part un moteur thermique de propulsion et d'autre part deux moteurs électriques de propulsion et un système motoréducteur.

Il est bien connu qu'un tel véhicule comprend en façade plusieurs accessoires, tels qu'un alternateur, un compresseur de climatisation ou une pompe centrifuge. Il est d'autre part connu de relier ces accessoires au moteur thermique du véhicule automobile, qui entraîne alors ces accessoires à l'aide d'une courroie reliée par une poulie au vilebrequin dudit moteur thermique.

Cependant, l'entraînement de ces accessoires a pour conséquence d'une part l'augmentation de la charge du moteur thermique et donc de sa consommation, et d'autre part la diminution du rendement dudit moteur thermique. En outre, l'augmentation de la charge du moteur thermique induit également une augmentation de la production et du rejet de dioxyde de carbone par ce dernier. Enfin, sur un véhicule hybride, lors d'une phase de fonctionnement exclusivement électrique au cours de laquelle le moteur thermique est à l'arrêt, certains accessoires, comme le compresseur de climatisation, sont alimentés par la batterie du véhicule, provoquant une décharge très rapide de cette dernière, qui devra par la suite être rechargée par le moteur thermique.

Il est également connu notamment du document US 7690451 un véhicule hybride présentant un groupe de propulsion hybride comportant un moteur thermique et un moteur électrique, ainsi qu'un système pour alimenter les accessoires du véhicule. En particulier, ce système comporte un moteur électrique d'entraînement des accessoires montés sur une façade.

Cependant, ce système de propulsion hybride a pour inconvénient d'être encombrant du fait de la présence de la façade accessoires, et que l'entraînement des accessoires ne peut être réalisé que par un moteur électrique supplémentaire. Le document EP2514620 montre un véhicule selon le preambule de la revendication 1.

La présente invention a pour but de pallier les inconvénients ci-dessus de l'art antérieur.

Pour atteindre ce but, le groupe motopropulseur selon l'invention comprend des premier et second moteurs électriques, un système motoréducteur comportant un arbre de sortie, les arbres moteurs des premier et second moteurs électriques étant mécaniquement reliés à l'arbre de sortie du système motoréducteur via respectivement deux dispositifs d'accouplement, le groupe motopropulseur comprenant en outre au moins des premier et second accessoires entraînés respectivement par les premier et second moteurs électriques, l'arbre moteur du premier moteur électrique étant aligné avec l'arbre du premier accessoire, et l'arbre moteur du second moteur électrique étant aligné avec l'arbre du second accessoire.

Selon une autre particularité, les premier et second accessoires sont mécaniquement reliés aux premier et second moteurs électriques par l'intermédiaire respectivement de deux dispositifs de transmission mécanique permettant des vitesses de rotation différentes de l'arbre moteur du premier moteur électrique et de l'arbre du premier accessoire d'une part, et de l'arbre moteur du second moteur électrique et de l'arbre du second accessoire d'autre part.

Selon une autre particularité, le groupe motopropulseur comprend un troisième accessoire relié en série avec le premier accessoire ou le second accessoire.

Selon une autre particularité, deux accessoires adjacents sont reliés l'un à l'autre par l'intermédiaire d'un dispositif de transmission mécanique permettant des vitesses de rotation différentes des arbres des deux accessoires adjacents.

Selon une autre particularité, un dispositif d'accouplement, tel qu'un embrayage ou un dispositif de crabotage, est mécaniquement relié entre le système de transmission mécanique du deuxième accessoire et le second moteur électrique.

Selon une autre particularité, un dispositif d'accouplement, tel qu'un embrayage ou un dispositif de crabotage, est mécaniquement relié entre le système de transmission mécanique du troisième accessoire et l'accessoire adjacent.

Selon une autre particularité, les premier et second accessoires sont choisis parmi un alternateur, un compresseur de climatisation et une pompe centrifuge.

Selon une autre particularité, le troisième accessoire est un compresseur de climatisation et en ce que les premier et second accessoires sont indifféremment un alternateur et une pompe centrifuge.

Selon une autre particularité, chaque accessoire est logé dans le carter du système motoréducteur.

L'invention concerne un véhicule automobile, de type hybride, comprenant un groupe motopropulseur tel que défini précédemment et un train de roues avant, un train de roues arrière, un moteur thermique à l'avant du véhicule pour entraîner le train de roues avant, les moteurs électriques et le système motoréducteur étant à l'arrière du véhicule pour entraîner le train de roues arrière.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 représente une vue schématique de dessus d'un véhicule hybride comprenant un groupe motopropulseur selon l'invention ;
- La figure 2 représente une vue schématique d'un groupe de propulsion électrique comportant un système motoréducteur et trois accessoires logés dans le carter du système motoréducteur ;
- La figure 3 représente une vue schématique d'un groupe de propulsion électrique comportant un système motoréducteur et deux accessoires logés dans le carter du système motoréducteur.

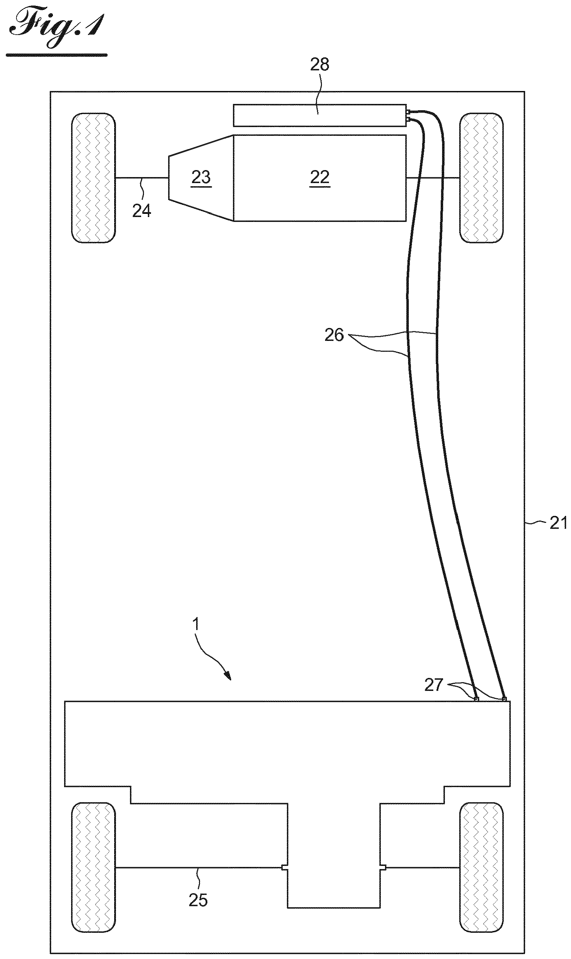

On décrit ci-après l'invention en se référant aux figures 1 à 3, appliquée à un véhicule automobile, notamment de type hybride.

Le véhicule automobile 21 de type hybride représenté à la figure 1 comprend à l'avant un moteur thermique de propulsion 22, relié à une boite de vitesses 23 et destiné à entraîner le train de roues avant 24 du véhicule. On définit les termes avant et arrière du véhicule 21 par rapport au sens de déplacement du véhicule adoptant sa vitesse de croisière.

Le véhicule 21 comprend à l'arrière un groupe de propulsion électrique 1, destiné à entraîner le train de roues arrière 25 du véhicule 21.

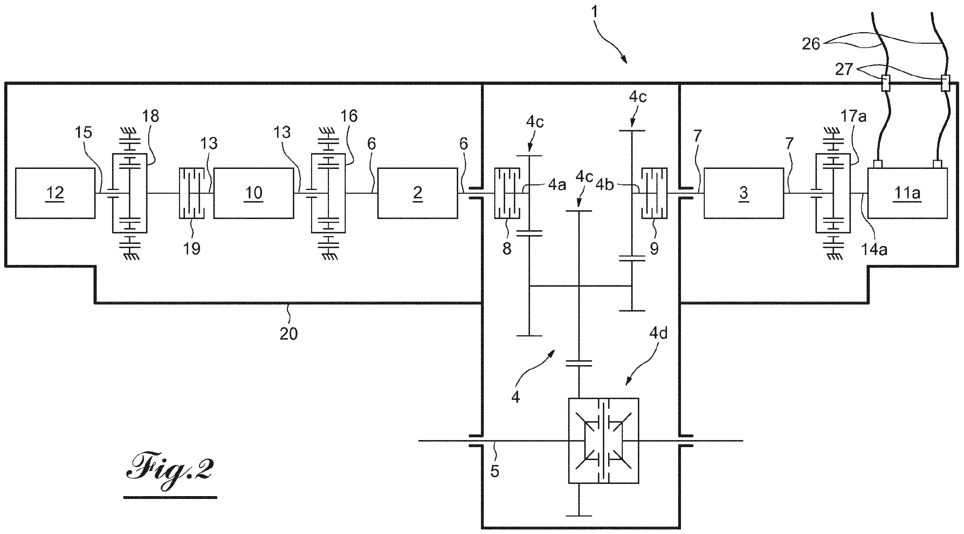

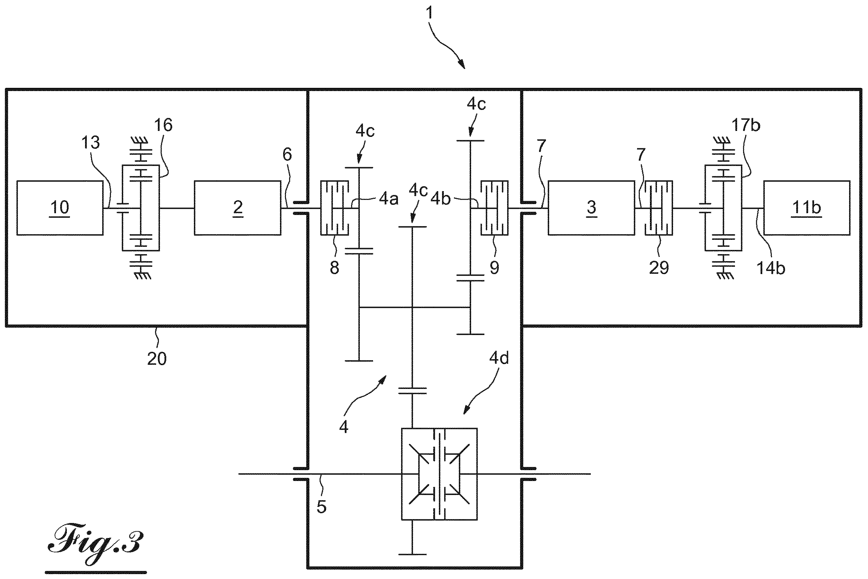

Le groupe de propulsion électrique 1 représenté également aux figures 2 et 3 comprend deux moteurs électriques 2, 3, ci-après nommés premier et second moteurs électriques 2, 3. Le groupe de propulsion électrique 1 comprend également un système motoréducteur 4 comportant deux arbres d'entrée 4a, 4b, un ensemble d'engrenages 4c assurant la fonction réductrice du système motoréducteur 4 et un différentiel 4d comprenant un arbre de sortie 5 destiné à entraîner le train de roues arrière 25. L'ensemble d'engrenages est destiné à être entraîné par au moins un des arbres d'entrée de l'ensemble d'engrenages, ce dernier étant apte à entraîner l'arbre de sortie 5 du système motoréducteur 4. Les moteurs électriques 2, 3 sont logés dans le carter 20 du système motoréducteur 4.

Le véhicule comprend également un radiateur 28 pour permettre de refroidir le liquide de refroidissement, qui est destiné à refroidir le moteur thermique 22 et le système motoréducteur 4.

Les arbres moteurs 6, 7 des premier et second moteurs électriques 2, 3 sont mécaniquement reliés respectivement aux deux arbres d'entrée 4a, 4b du système motoréducteur 4 via respectivement deux dispositifs d'accouplement 8, 9 compris dans le carter 20 du système motoréducteur 4, de sorte que la rotation d'au moins un des arbres moteurs 6, 7 des premier et second moteurs électriques 2, 3 entraîne en rotation l'arbre de sortie 5 du système motoréducteur 4.

Chaque dispositif d'accouplement 8, 9, par exemple et de manière non limitative un dispositif d'embrayage ou un dispositif de crabotage, permet d'accoupler ou de désaccoupler n'importe quel des deux moteurs électriques 2, 3 du système motoréducteur 4, en fonction des besoins de propulsion. Les différentes phases de fonctionnement du groupe de propulsion électrique 1 seront décrites plus loin. En outre, les moteurs électriques 2, 3 sont logés dans le carter 20 du système motoréducteur 4.

En référence à la figure 2, un premier mode de réalisation de l'invention va maintenant être décrit.

Le groupe de propulsion électrique 1 comprend trois accessoires 10, 11a, 12 logés dans le carter 20 du système motoréducteur 4, ci-après nommés respectivement premier, second et troisième accessoires.

Le premier accessoire 10 est entrainé par l'arbre moteur 6 du premier moteur électrique 2, et le second accessoire 11a est entrainé par l'arbre moteur 7 du deuxième moteur électrique 3. Ces accessoires 10, 11a sont montés de telle sorte que leurs arbres sont respectivement alignés avec les arbres moteurs 6, 7 des premier et second moteurs électriques 2, 3. Une extrémité des arbres 13, 14a des premier 10 et second 11a accessoires sont mécaniquement reliés aux premier 2 et second 3 moteurs électriques par l'intermédiaire respectivement de deux dispositifs de transmission mécanique 16, 17a permettant des vitesses de rotation différentes de l'arbre moteur 6 du premier moteur électrique 2 et de l'arbre 13 du premier accessoire 10 d'une part, et de l'arbre moteur 7 du second moteur électrique 3 et de l'arbre 14a du second accessoire 11a d'autre part.

De préférence, les deux accessoires 10, 11a sont indifféremment un alternateur et une pompe centrifuge. La pompe centrifuge ainsi entrainée par un des moteurs électriques 2, 3 a pour fonction d'assurer le refroidissement du groupe de propulsion électrique 1. Cette pompe est reliée via des tuyaux 26 au radiateur 28 du véhicule 21. Ainsi, les tuyaux 26 sont raccordés notamment à la pompe centrifuge à des embouts 27 solidaires du carter 20 du système motoréducteur 4 pour amener une entrée et une sortie de liquide de refroidissement.

Le groupe de propulsion électrique 1 comprend un troisième accessoire 12 logé dans le carter 20 du système motoréducteur 4, et relié en série au premier accessoire 10 de sorte que l'autre extrémité de l'arbre 13 du premier accessoire 10 soit mécaniquement reliée à l'extrémité de l'arbre 15 du troisième accessoire 12 via un système de transmission mécanique 18 logé dans le carter 20 du système motoréducteur 4. Ainsi, l'arbre 13 du premier accessoire 10, qui est apte à être entraîné par l'arbre moteur 6 du premier moteur électrique 2, est apte à entraîner l'arbre 15 du troisième accessoire 12. Les arbres 13, 15 des premier et troisième accessoires 10, 12 sont en outre alignés entre eux et avec l'arbre moteur 6 du premier moteur électrique 2.

De préférence, le troisième accessoire 12, qui est le plus éloigné du premier moteur électrique 2, est un compresseur de climatisation. Les systèmes de transmission mécanique 16, 17a, 18, par exemple des trains épicycloïdaux, reliant les arbres 13, 15 des premier et troisième accessoires 10, 12 entre eux, l'arbre moteur 6 du second moteur électrique 2 et l'arbre 13 du premier accessoire 10 entre eux, et enfin l'arbre moteur 7 du second moteur électrique 3 et l'arbre 14a du deuxième accessoire 11a entre eux, autorisent le montage dans le groupe de propulsion électrique 1 de trois accessoires 10, 11a, 12 dont les arbres 13, 14a, 15 n'ont pas forcément la même vitesse de rotation. Chaque train épicycloïdal 16, 17a, 18, dont le bâti est solidaire du carter 20 du système motoréducteur 4, comprend une couronne solidaire du bâti, un engrenage dit planétaire et une pluralité d'engrenages dits satellites montés sur un porte-satellites, le porte-satellites et le planétaire étant respectivement solidaires de deux arbres coaxiaux. Un des arbres coaxiaux du train épicycloïdal 16 est relié à l'arbre 13 du premier accessoires 10 et l'autre des arbres coaxiaux est relié à l'arbre moteur 6 du premier moteur électrique 2. Un des arbres coaxiaux du train épicycloïdal 17a est relié à l'arbre 14a du second accessoire 11a et l'autre des arbres coaxiaux est relié à l'arbre moteur 7 du deuxième moteur électrique 3. Enfin, un des arbres coaxiaux du train épicycloïdal 18 est relié à l'arbre 13 du premier accessoire 10 et l'autre des arbres coaxiaux est relié à l'arbre 15 du troisième accessoire 12.

De manière optionnelle, un dispositif d'accouplement 19, par exemple un dispositif d'embrayage ou de crabotage, reliant les arbres 13, 15 des premier et troisième accessoires 10, 12 permet de désaccoupler au besoin le troisième accessoire 12 du premier moteur électrique 2. C'est pour cette raison que le troisième accessoire 12 est préférentiellement un compresseur de climatisation, car son fonctionnement est généralement intermittent dans un véhicule 21, notamment automobile.

La figure 3 présente un deuxième mode de réalisation de l'invention, comprenant deux accessoires 10, 11b.

Le groupe motopropulseur selon l'invention comprend un premier accessoire 10 logé dans le carter 20 du système motoréducteur 4, et qui est par exemple une pompe centrifuge ou un alternateur. Ce premier accessoire 10 est monté de telle sorte que l'arbre moteur 6 du premier moteur électrique 2 et l'arbre 13 du premier accessoire 10 sont alignés. L'arbre moteur 6 du premier moteur électrique 2 est mécaniquement relié à l'arbre 13 du premier accessoire 10 via un système de transmission mécanique 16. L'arbre 13 du premier accessoire 10 et l'arbre moteur 6 du premier moteur électrique 2 sont alignés entre eux.

Le groupe motopropulseur comprend un second accessoire 11b, logé dans le carter 20 du système motoréducteur 4, et qui est par exemple un compresseur de climatisation. Ce second accessoire 11b est monté de telle sorte que l'arbre moteur 7 du second moteur électrique 3 et l'arbre 14b du second accessoire 11b soient alignés. L'arbre moteur 7 du second moteur électrique 3 est mécaniquement relié à l'arbre 14b du second accessoire 11b via un système de transmission mécanique 17b. L'arbre 14b du second accessoire 11b et l'arbre moteur 7 du second moteur électrique 3 sont alignés entre eux.

Les systèmes de transmission mécanique 16, 17b, par exemple des trains épicycloïdaux, montés respectivement entre le premier accessoire 10 et le premier moteur électrique 2 et entre le second accessoire 11b et le second moteur électrique 3, autorisent le montage dans le groupe de propulsion électrique 1 de deux accessoires 10, 11b dont les arbres 13, 14b n'ont pas forcément la même vitesse de rotation. Chaque train épicycloïdal 16, 17b dont le bâti est solidaire du carter 20 du système motoréducteur 4, comprend une couronne solidaire du bâti, un engrenage dit planétaire et une pluralité d'engrenages dits satellites montés sur un porte-satellites, le porte-satellites et le planétaire étant respectivement solidaires de deux arbres coaxiaux. Un des arbres coaxiaux du train épicycloïdal 16 est relié à l'arbre 13 du premier accessoires 10 et l'autre des arbres coaxiaux est relié à l'arbre moteur 6 du premier moteur électrique 2. Un des arbres coaxiaux du train épicycloïdal 17b est relié à l'arbre 14b du second accessoire 11b et l'autre des arbres coaxiaux est relié à l'arbre moteur 7 du deuxième moteur électrique 3.

De manière optionnelle, un dispositif d'accouplement 29, par exemple un dispositif d'embrayage ou de crabotage, reliant l'arbre moteur 7 du second moteur électrique 3 au système de transmission mécanique 17b du second accessoire 11b permet de désaccoupler au besoin le deuxième accessoire 11b du deuxième moteur électrique 3. C'est pour cette raison que le deuxième accessoire 11b est préférentiellement un compresseur de climatisation, car son fonctionnement est généralement intermittent dans un véhicule 21, notamment automobile.

Les différentes phases de fonctionnement du groupe de propulsion électrique 1 sont communes aux deux modes de réalisation décrits ci-dessus et vont maintenant être décrites.

On peut distinguer trois phases de fonctionnement différentes : une phase thermique pure, une phase électrique ou hybride à faible vitesse, et une phase électrique ou hybride à vitesse rapide.

Au cours de la phase de fonctionnement dite thermique pure, le moteur thermique 22 assure seul la propulsion du véhicule 21. Les dispositifs d'accouplement 8, 9 sont donc dans une configuration telle que les arbres moteurs 6, 7 des deux moteurs électriques 2, 3 sont désaccouplés du système motoréducteur 4. Les premier et second moteurs électriques 2, 3 demeurent alimentés par une batterie du véhicule 21 pour assurer la rotation de leurs arbres moteurs respectifs 6, 7, et donc l'entraînement au moins des arbres 13, 14a des premier 10 et deuxième 11a accessoires. Lorsque le dispositif d'accouplement 19, 29 est engagé pour accoupler l'accessoire correspondant 11b, 12, alors le moteur électrique correspondant 2, 3 alimenté par la batterie du véhicule 21 entraine également l'arbre 14b, 15 de cet accessoire 11b, 12.

De manière alternative, pour permettre l'entraînement continu au moins des arbres 13, 14a des premier et second accessoires 10, 11a respectivement par les arbres moteurs 6, 7 des premier et second moteurs électriques 2, 3, les dispositifs d'accouplement 8, 9 maintiennent l'accouplement des arbres moteurs des moteurs électriques avec le système motoréducteur 4, de sorte que l'arbre de sortie 5 du système motoréducteur 4, entraîné en rotation par le train de roues arrière 25, entraîne en rotation les arbres moteurs des premier et second moteurs électriques. Lorsque le dispositif d'accouplement 19, 29 est engagé pour accoupler l'accessoire correspondant 11b, 12, alors l'arbre de sortie 5 du système motoréducteur 4 entraine également l'arbre 14b, 15 de cet accessoire 11b, 12.

Au cours de la phase de fonctionnement dite électrique ou hybride à faible vitesse, le groupe de propulsion électrique 1 assure au moins une partie de la propulsion du véhicule 21 par entraînement du train de roues arrière 25. La propulsion peut être purement électrique, auquel cas le moteur thermique 22 est arrêté, ou hybride, auquel cas le moteur thermique 22 participe également à la propulsion du véhicule en entraînant le train de roues avant 24.

L'arbre moteur 6, 7 d'un des deux moteurs électriques 2, 3 est accouplé au système motoréducteur 4 via le dispositif d'accouplement correspondant 8, 9, de sorte que ce moteur électrique accouplé et alimenté par la batterie entraîne en rotation l'arbre de sortie 5 du système motoréducteur 4.

L'autre moteur électrique est quant à lui désaccouplé du système motoréducteur 4, de sorte que ce moteur ne participe pas à l'entraînement de l'arbre de sortie 5 du système motoréducteur 4. Ce moteur électrique est néanmoins alimenté par la batterie, de sorte que son arbre moteur entraîne en rotation l'arbre 14a, 14b du deuxième accessoire 11a, 11b s'il s'agit du second moteur électrique 3, ou bien l'arbre 13 du premier accessoire 10 s'il s'agit du premier moteur électrique 2 qui est désaccouplé du système motoréducteur 4, et le cas échéant l'arbre 15 du troisième accessoire 12 si ce dernier est accouplé au premier accessoire 10 via le dispositif d'accouplement 19 correspondant.

La rotation de l'arbre moteur du moteur électrique désaccouplé est pilotée, par exemple par un calculateur du véhicule 21, en fréquence de rotation au juste nécessaire, c'est-à-dire que la vitesse de rotation atteinte par l'arbre moteur du moteur électrique désaccouplé du système motoréducteur 4 est juste suffisante pour permettre l'alimentation en énergie du deuxième accessoire 11a, 11b s'il s'agit du second moteur électrique 3 qui est désaccouplé du système motoréducteur 4, ou au moins du premier accessoire 10 et le cas échéant le troisième accessoires 12 s'il s'agit du premier moteur électrique 2 qui est désaccouplé du système motoréducteur 4.

Au cours de la phase de fonctionnement dite électrique ou hybride à vitesse rapide, le groupe de propulsion électrique 1 assure au moins une partie de la propulsion du véhicule 21 par entraînement du train de roues arrière 25. La propulsion peut être purement électrique, auquel cas le moteur thermique 22 est arrêté, ou hybride, auquel cas le moteur thermique 22 participe également à la propulsion du véhicule 21 en entraînant le train de roues avant 24.

Cependant, dans cette phase de fonctionnement, un plus grand couple doit être fourni au moins par le groupe de propulsion électrique 1 pour maintenir la vitesse de croisière du véhicule 21.

Pour ce faire, les deux moteurs électriques 2, 3 sont accouplés au système motoréducteur 4, et participent tous les deux à l'entraînement de l'arbre de sortie 5 du système motoréducteur 4. Dans cette phase de fonctionnement, les vitesses de rotation au moins des arbres 13, 14a des premier et deuxième accessoires 10, 11a sont donc tributaires de la vitesse de rotation du train de roues arrière 25 du véhicule 21. Il en est de même pour le deuxième accessoire 11b et le troisième accessoire 12 lorsque les dispositifs d'accouplement correspondant 19, 29 est engagé pour permettre l'entrainement des arbres 14b, 15 des accessoires correspondants 11b, 12.

Ainsi, le groupe de propulsion électrique 1 selon l'invention, intégrant dans le carter 20 du système motoréducteur 4 les accessoires 10, 11a, 11b, 12 comme l'alternateur, le compresseur de climatisation et la pompe centrifuge, permet de supprimer la façade accessoires utilisée dans les systèmes connus. Ceci permet de réduire la charge du moteur thermique 22, qui n'a plus besoin d'alimenter les accessoires, et en outre d'améliorer le rendement de celui-ci.

L'intégration de systèmes de transmission mécanique dans le groupe de propulsion électrique 1 permet également au constructeur de choisir des accessoires fonctionnant à des fréquences de rotation différentes. Il est possible au constructeur de dimensionner librement les accessoires 10, 11a, 11b, 12, les premier, second et troisième accessoires 10, 11a, 11b, 12 pouvant être choisis parmi n'importe quel type d'accessoire automobile habituellement intégré en façade. Enfin, l'alignement des arbres des accessoires avec l'arbre moteur 6, 7 du moteur électrique correspondant 2, 3 permet de réduire l'encombrement du groupe de propulsion électrique.

La configuration telle que décrite n'est pas limitée aux modes de réalisation décrits précédemment et représentés sur les figures. Elle n'a été donnée qu'à titre d'exemple non limitatif. De multiples modifications peuvent être apportées sans pour autant sortir du cadre de l'invention. En particulier, le groupe de propulsion électrique 1 peut comporter d'autres accessoires montés en série avec un autre accessoire 10, 11a, 11b, 12 déjà présent, avec ou sans dispositif d'accouplement et système de transmission mécanique du type train épicycloïdal.

## Revendications

1. Véhicule automobile (21) hybride comprenant un groupe motopropulseur , ledit groupe motopropulseur comprenant des premier (2) et second (3) moteurs électriques, un système motoréducteur (4) comportant un arbre de sortie (5), les arbres moteurs (6, 7) des premier (2) et second (3) moteurs électriques étant mécaniquement reliés à l'arbre de sortie (5) du système motoréducteur (4) via respectivement deux dispositifs d'accouplement (8, 9), le groupe motopropulseur comprenant en outre au moins des premier (10) et second (11a, 11b) accessoires entraînés respectivement par les premier (2) et second (3) moteurs électriques, l'arbre moteur (6) du premier moteur électrique (2) étant aligné avec l'arbre (13) du premier accessoire (10), et l'arbre moteur (7) du second moteur électrique (3) étant aligné avec l'arbre (14a, 14b) du second accessoire (11a, 11b) **caractérisé en ce qu'**il comprend un train de roues avant (24), un train de roues arrière (25), un moteur thermique (22) à l'avant du véhicule pour entraîner le train de roues avant (24), les moteurs électriques (2, 3) et le système motoréducteur (4) étant à l'arrière du véhicule (21) pour entraîner le train de roues arrière (25).

2. Véhicule automobile (21) selon la revendication 1, **caractérisé en ce que** les premier (10) et second (11a, 11b) accessoires sont mécaniquement reliés aux premier (2) et second (3) moteurs électriques par l'intermédiaire respectivement de deux dispositifs de transmission mécanique (16, 17a, 17b) permettant des vitesses de rotation différentes de l'arbre moteur (6) du premier moteur électrique (2) et de l'arbre (13) du premier accessoire (10) d'une part, et de l'arbre moteur (7) du second moteur électrique (3) et de l'arbre (14a, 14b) du second accessoire (11a, 11b) d'autre part.

3. Véhicule automobile (21) selon la revendication 1 ou 2, **caractérisé en ce qu'**un dispositif d'accouplement (29), tel qu'un embrayage ou un dispositif de crabotage, est mécaniquement relié entre le système de transmission mécanique (17b) du deuxième accessoire (11b) et le second moteur électrique (3).

4. Véhicule automobile (21) selon la revendication 3, **caractérisé en ce que** les premier (10) et second (11b) accessoires sont choisis parmi un alternateur, un compresseur de climatisation et une pompe centrifuge.

5. Véhicule automobile (21) selon la revendication 1 ou 2, **caractérisé en ce qu'**il comprend un troisième accessoire (12) relié en série avec le premier accessoire (10) ou le second accessoire (11a).

6. Véhicule automobile (21) selon la revendication 5, **caractérisé en ce que** deux accessoires adjacents (10, 12) sont reliés l'un à l'autre par l'intermédiaire d'un dispositif de transmission mécanique (18) permettant des vitesses de rotation différentes des arbres (13, 15) des deux accessoires adjacents (10, 12).

7. Véhicule automobile (21) selon la revendication 5 ou 6, **caractérisé en ce que** le troisième accessoire (12) est un compresseur de climatisation et **en ce que** les premier (10) et second (11a) accessoires sont indifféremment un alternateur et une pompe centrifuge.

8. Véhicule automobile (21) selon l'une quelconque des revendications 5 à 7, **caractérisé en ce qu'**un dispositif d'accouplement (19), tel qu'un embrayage ou un dispositif de crabotage, est mécaniquement relié entre le système de transmission mécanique (18) du troisième accessoire (12) et l'accessoire adjacent (10).

9. Véhicule automobile (21) selon l'une quelconque des revendications 1 à 8, **caractérisé en ce que** chaque accessoire (10, 11a, 11b, 12) est logé dans le carter (20) du système motoréducteur (4).

## Patentansprüche

1. Hybridkraftfahrzeug (21), das eine Motorantriebsanlage umfasst, wobei die Motorantriebsanlage einen ersten (2) und einen zweiten (3) Elektromotor, ein Untersetzungssystem (4), das eine Ausgangswelle (5) umfasst, umfasst, wobei die Antriebswellen (6, 7) des ersten (2) und zweiten (3) Elektromotors mit der Ausgangswelle (5) des Untersetzungssystems (4) jeweils über zwei Kupplungsvorrichtungen (8, 9) mechanisch verbunden sind, wobei die Motorantriebsanlage außerdem mindestens ein erstes (10) und ein zweites (11a, 11b) Zubehörteil umfasst, die jeweils von dem ersten (2) und dem zweiten (3) Elektromotor angetrieben werden, wobei die Antriebswelle (6) des ersten Elektromotors (2) mit der Welle (13) des ersten Zubehörs (10) ausgerichtet ist, und die Antriebswelle (7) des zweiten Elektromotors (3) mit der Welle (14a, 14b) des zweiten Zubehörs (11a, 11b) ausgerichtet ist, **dadurch gekennzeichnet, dass** sie eine Vorderradachse (24), eine Hinterradachse (25), eine Brennkraftmaschine (22) an der Vorderseite des Fahrzeugs umfasst, um die Vorderradachse (24) anzutreiben, wobei sich die Elektromotoren (2, 3) und das Untersetzungssystem (4) an der Rückseite des Fahrzeugs (21) befinden, um die Hinterradachse (25) anzutreiben.

2. Kraftfahrzeug (21) nach Anspruch 1, **dadurch gekennzeichnet, dass** das erste (10) und das zweite (11a, 11b) Zubehörteil mechanisch mit dem ersten (2) und dem zweiten (3) Elektromotor jeweils über zwei mechanische Kraftübertragungsvorrichtungen (16, 17a, 17b verbunden sind, die unterschiedliche Drehzahlen der Antriebswelle (6) des ersten Elektromotors (2) und der Welle (13) des ersten Zubehörteils (10) einerseits und der Antriebswelle (7) des zweiten Elektromotors (3) und der Welle (14a, 14b) des zweiten Zubehörteils (11a, 11b) andererseits erlauben.

3. Kraftfahrzeug (21) nach Anspruch 1 oder 2, **dadurch gekennzeichnet, dass** eine Kupplungsvorrichtung (29) wie eine Kupplung oder eine Klauenkupplungsvorrichtung mechanisch zwischen dem mechanischen Kraftübertragungssystem (17b) des zweiten Zubehörs (11b) und dem zweiten Elektromotor (3) verbunden ist.

4. Kraftfahrzeug (21) nach Anspruch 3, **dadurch gekennzeichnet, dass** das erste (10) und das zweite (11b) Zubehörteil aus einer Lichtmaschine, einem Klimaanlagenkompressor und einer Kreiselpumpe ausgewählt sind.

5. Kraftfahrzeug (21) nach Anspruch 1 oder 2, **dadurch gekennzeichnet, dass** es ein drittes Zubehörteil (12) umfasst, das in Serie mit dem ersten Zubehörteil (10) oder dem zweiten Zubehörteil (11a) verbunden ist.

6. Kraftfahrzeug (21) nach Anspruch 5, **dadurch gekennzeichnet, dass** die zwei benachbarten Zubehörteile (10, 12) miteinander über eine mechanische Kraftübertragungsvorrichtungen (18) verbunden sind, die unterschiedliche Drehzahlen der Wellen (13, 15), der zwei benachbarten Zubehörteile (10, 12) erlaubt.

7. Kraftfahrzeug (21) nach Anspruch 5 oder 6, **dadurch gekennzeichnet, dass** das dritte Zubehörteil (12) ein Klimaanlagenkompressor ist, und dass das erste (10) und das zweite (11a) Zubehörteil gleichermaßen eine Lichtmaschine und eine Kreiselpumpe sind.

8. Kraftfahrzeug (21) nach einem der Ansprüche 5 bis 7, **dadurch gekennzeichnet, dass** eine Kupplungsvorrichtung (19), wie eine Kupplung oder eine Klauenkupplungsvorrichtung, mechanisch zwischen dem mechanischen Kraftübertragungssystem (18) des dritten Zubehörteils (12) und dem benachbarten Zubehörteil (10) verbunden ist.

9. Kraftfahrzeug (21) nach einem der Ansprüche 1 bis 8, **dadurch gekennzeichnet, dass** jedes Zubehörteil (10, 11a, 11b, 12) in dem Gehäuse (20) des Untersetzungssystems (4) untergebracht ist.

## Claims

1. Hybrid motor vehicle (21) comprising a power plant, said power plant comprising first (2) and second (3) electric motors, a motor gear system (4) comprising an output shaft (5), the drive shafts (6, 7) being connected mechanically to the output shaft (5) of the motor gear system (4) respectively via two coupling devices (8, 9), the power plant further comprising at least one of the first (10) and second (11a, 11b) accessories driven by the first (2) and second (3) electric motors respectively, the drive shaft (6) of the first electric motor (2) being aligned with the shaft (13) of the first accessory (10), and the drive shaft (7) of the second electric motor (3) being aligned with the shaft (14a, 14b) of the second accessory (11a, 11b), **characterized in that** it comprises a front running gear (24), a rear running gear (25), an internal combustion engine (22) in the front of the vehicle for driving the front running gear (24), the electric motors (2, 3) and the motor gear system (4) being in the rear of the vehicle (21) for driving the rear running gear (25).

2. Motor vehicle (21) according to Claim 1, **characterized in that** the first (10) and the second (11a, 11b) accessories are connected mechanically to the first (2) and second (3) electric motors respectively via two mechanical transmission devices (16, 17a, 17b) which enable different rotating speeds of the drive shaft (6) of the first electric motor (2) and of the shaft (13) of the first accessory (10) on the one hand, and of the drive shaft (7) of the second electric motor (3) and of the shaft (14a, 14b) of the second accessory (11a, 11b) on the other hand.

3. Motor vehicle (21) according to Claim 1 or 2, **characterized in that** a coupling device (29) such as a clutch or a positive locking device is connected mechanically between the mechanical transmission system (17b) of the second accessory (11b) and the second electric motor (3).

4. Motor vehicle (21) according to Claim 3, **characterized in that** the first (10) and second (11b) accessories are selected from an alternator, an air conditioning compressor and a centrifugal pump.

5. Motor vehicle (21) according to Claim 1 or 2, **characterized in that** it comprises a third accessory (12) connected in series to the first accessory (10) or the second accessory (11a).

6. Motor vehicle (21) according to Claim 5, **characterized in that** two adjacent accessories (10, 12) are connected to each other via a mechanical transmission device (18) which enables different rotating speeds of the shafts (13, 15) of the two adjacent accessories (10, 12).

7. Motor vehicle (21) according to Claim 5 or 6, **characterized in that** the third accessory (12) is an air conditioning compressor and that the first (10) and second (11a) accessories are optionally either an alternator or a centrifugal pump.

8. Motor vehicle (21) according to any one of Claims 5 to 7, **characterized in that** a coupling device (19) such as a clutch or a positive locking device is connected mechanically between the mechanical transmission system (18) of the third accessory (12) and the adjacent accessory (10).

9. Motor vehicle (21) according to any one of Claims 1 to 8, **characterized in that** each accessory (10, 11a, 11b, 12) is accommodated in the crankcase (20) of the motor gear system (4).
